# EUROPEAN PATENT APPLICATION

(11) **EP 3 480 325 A1**
(43) Date of publication of application: **08.05.2019**
(21) Application number: 17818970.0
(22) Date of filing: 15.05.2017
(51) Int. Cl.: C22B 4/08, C21B 11/10

(54) **SMELTING METHOD FOR METALLURGICAL ELECTRIC-FURNACE**

(30) Priority: 01.07.2016 CN 201610515542
(71) Applicant: Beijing Zhongkaihongde Technology Co., Ltd., Beijing 100088 (CN)
(72) Inventor: CHAO, John Tung, Beijing 100088 (CN); MU, Wenheng, Beijing 100088 (CN); LIU, Jibin, Beijing 100088 (CN); WANG, Cunhu, Beijing 100088 (CN); CHEN, Lei, Beijing 100088 (CN); WEN, Han, Beijing 100088 (CN)
(74) Representative: DREISS Patentanwälte PartG mbB
(86) International application number: PCT/CN2017/084396
(87) International publication number: WO 2018/000973

(57) **Abstract**

The present disclosure provides a metallurgical electric furnace, and a smelting method for the metallurgical electric furnace. The metallurgical electric furnace includes a furnace body, an oxygen lance and a coal lance, wherein the furnace body is provided with a furnace chamber; the oxygen lance is located on a side wall of the furnace chamber and is used for blowing oxygen into the slag promoting the smelting process, and the outlet of the oxygen lance is higher than the slag; and the coal lance is located on the side wall of the furnace chamber beside the oxygen lance and is used for spraying coal into the slag, and the outlet of the coal lance is higher than the slag. The metallurgical electric furnace provided by the present disclosure adopts the oxygen blowing and coal spraying technology, O₂ oxidizes low-valent reduced state substances in the slags, the chemical energy released in an oxidation process melts the feed, and meanwhile, the coal particles are also injected into the slag from top to bottom to reduce the substances in oxidation state into reduced state; and in the slag, a combustion reaction occurs between CO, C and O₂, the heat of combustion provides heat for the melting of the feed, so that the chemical energy provides a large amount of energy for the smelting process, and thus the consumption of electric energy is reduced.

## Description

### CROSS-REFERENCE TO RELATED APPLICATIONS

The present application claims the priority of Chinese Application No. 2016105155421, filed in the Chinese Patent Office on July 01, 2016, and entitled "METALLURGICAL ELECTRIC FURNACE, AND SMELTING METHOD", the entire contents of which are herein incorporated by reference.

### TECHNICAL FIELD

The present disclosure relates to the field of metallurgy, and more particularly to a metallurgical electric furnace and a smelting method for the metallurgical electric furnace.

### BACKGROUND

Oxygen has been widely used in the metallurgical industry and has been very successful, wherein the oxygen has been successfully used in steelmaking converters, has been successfully applied to the melting of scrap steel in electric arc furnaces, and is combined with coal injection to produce foaming slags to improve the efficiency, which are very mature and widely used process technologies. The oxygen has been successfully applied to the nonferrous metallurgy since the 1970s. There are two famous types: firstly, Ausmelt developed by Outotec has been used for smelting lead, zinc, nickel, copper, tin and other minerals, and secondly, ISASMELT developed by MIM and CSIRO in Australia has also been successfully applied to the smelting of non-ferrous metals. For more than a decade, RIO TINTO has also successfully developed the HISMELT technology for ironmaking, which has also been commercialized, but it has not been widely used in the ironmaking industry. Recently, the Russian company Technologiya Metallov published its Project Magma on its website to explain the oxygen blowing and coal spraying technology, which can be applied not only to the non-ferrous metals, but also can be applied to ferrous metals

### (Ferrous Metallurgy)

In the current metallurgical electric furnaces (such as a titanium slag electric furnace), the chemical energy has never been applied by virtue of the oxygen blowing and coal spraying technology to reduce the consumption of electric energy and to improve the efficiency of smelting. The present disclosure aims at promoting the oxygen blowing and coal spraying technology to such electric furnaces.

### SUMMARY

To this end, the objective of one aspect of the present disclosure is to provide a metallurgical electric furnace.

The objective of another aspect of the present disclosure is to provide a smelting method for the above metallurgical electric furnace.

In order to achieve the above objectives, the embodiment of one aspect of the present disclosure provides a metallurgical electric furnace, including: a furnace body provided with a furnace chamber; an oxygen lance located on a side wall of the furnace chamber and used for blowing oxygen into slag promoting the smelting process, wherein the outlet of the oxygen lance is higher than the slag; and a coal lance located on the side wall of the furnace chamber and used for spraying coal into the slag, wherein the outlet of the coal lance is higher than the slag.

In the metallurgical electric furnace provided by the above embodiment of the present disclosure, especially in the metallurgical electric furnace operated by an open arc, the outlet of the oxygen lance and the outlet of the coal lance are higher than the upper surface of the slag, the O₂ is blown into the slag from top to bottom by the oxygen lance, the low-valent reduced state substance in the slag is oxidized to a high-valent oxidation state substance, a large amount of chemical energy is released in the oxidation process, the temperature of the slag is increased, the released chemical energy can effectively melt the feed, meanwhile, the coal particles are also injected into the slag from top to bottom through the coal lance, the carbon in the coal reduces the high-valent oxidation state substance to a low-valent reduced state, when the high-valent oxidation state substance is reduced by the carbon, CO is released, meanwhile, the reduction reaction is endothermic, and then the energy released by the oxidation of the reduced state substance is also supplied to the reduction reaction; in the slag, due to the existence of the O₂, the O₂ may also cause a combustion reaction with the CO and C, the heat of combustion which is produced by the combustion reaction can raise the temperature of the slag so as to provide heat for the melting of the feed, and can also provide energy for the reduction reaction, in this way, both the chemical energy released in the oxidation reaction and the energy released in the combustion reaction can be used for the smelting of the feed, so that, in addition to electrical energy, chemical energy can also provide a large amount of energy for the smelting process, thereby increasing the total power available for smelting, and thus improving the productivity and efficiency, and it is especially effective for the slag with a high melting point, so that the consumption of electric energy is reduced.

In the present solution, the oxygen lance and the coal lance are both arranged above the slag, the O₂ and the coal particles are blown into the slag from top to bottom, and is away from the furnace lining, so that the damage to the furnace lining is reduced, and the service life of the furnace lining is prevented from being shortened. As the O₂ is blown from top to bottom and inclines toward a direction away from the installation position of the oxygen lance on the side wall of the furnace chamber, that is, the spraying direction of the O₂ faces to the opposite side of the installation position of the oxygen lance on the side wall of the furnace chamber, the coal particles is also sprayed from top to bottom and inclines toward the direction away from the installation position of the coal lance on the side wall of the furnace chamber, that is, the spraying direction of the coal particles faces to the opposite side of the installation position of the coal lance on the side wall of the furnace chamber, so that the slag flows toward the opposite side of the installation positions of the oxygen lance and the coal lance on the side wall of the furnace chamber, but is very far away from the furnace lining, in this way, the generated influence is low, and the integrity of the furnace lining can be protected.

Specifically, using an example that the reduced state substance in the slag is Me₂O₃, the chemical reactions occurred in the slag during the oxygen blowing and coal spraying include:

Me₂O₃ + 0.5O₂ = 2MeO₂ (1)

2MeO₂ + C = Me₂O₃ + CO (2)

CO + 0.5O₂ = CO₂ (3)

O₂ + C = CO₂ (4)

After the O₂ is blown in, the reaction (1) occurs, the O₂ oxidizes the Me₂O₃ into MeO₂, the oxidation reaction is an exothermic reaction, and a large amount of chemical energy is released in the reaction for smelting of the feed; after the coal particles is injected, the reaction (2) occurs, the carbon reduces the MeO₂ into Me₂O₃, meanwhile, releases CO, the reaction (2) is an endothermic reaction, and the chemical energy released in the reaction (1) is further used for providing energy for the reaction (2) in addition to smelting the feed; and the O₂ in the slag may also cause the combustion reactions (3) and (4) with the CO and C, a part of the heat of combustion is released into the slag for smelting the feed and being supplied to the reaction (2), as the reaction (1), the reaction (3) and the reaction (4) are all exothermic reactions, and the chemical energy released in the reactions is added to the electric energy, thereby improving the total smelting power and reducing the consumption of electric energy. At the same time, a large amount of CO is released in the reaction (2) to form bubbles, which swells the slag into foam slag, and the formation of the foam slag is favorable for the blowing of the O₂.

The electric furnace of the present disclosure is fixed, the feed is supplied unceasingly, when the molten iron reaches a certain liquid level, a molten metal outlet is opened to release the molten metal, the feed is supplied as usual, and the oxygen and coal are blown and sprayed as usual. After a certain amount of the molten metal flows out, the molten metal outlet is blocked by a blocking machine, after a period of time, when the slag level is too high, a slag opening is opened to discharge the slag, the feed is supplied as usual, and the oxygen and coal are blown and sprayed as usual. In addition, the metallurgical electric furnace provided by the above embodiment of the present disclosure further has the following additional technical features:
In the above technical solution, preferably, the metallurgical electric furnace includes a plurality of oxygen lances that are uniformly distributed along the side wall of the furnace chamber; and a plurality of coal lances that are uniformly distributed along the side wall of the furnace chamber; wherein the oxygen lances are located below the coal lances, or the oxygen lances and the coal lances are located at the same height on the side wall of the furnace chamber.

In a specific embodiment of the present disclosure, the oxygen lances are located below the coal lances. Preferably, the number of the oxygen lances is equal to the number of the coal lances, the coal lances are located right above the oxygen lances, the coal lances and the oxygen lances are arranged in an above-and-below pattern.

In another specific embodiment of the present disclosure, the oxygen lances and the coal lances are located at the same height on the side wall 11 of the furnace chamber 1, and are arranged next to one another in an alternate pattern.

Preferably, the plurality of oxygen lances are uniformly distributed along the circumferential direction of the side wall of the furnace chamber and are located at the same height on the side wall of the furnace chamber; and the plurality of coal lances are uniformly distributed along the circumferential direction of the side wall of the furnace chamber and are located at the same height on the side wall of the furnace chamber.

Preferably, a coal lance and an oxygen lance can be placed in the same cooling jacket, and the distance between the injection points of the coal lance and the oxygen lance in a molten pool is not less than 300mm.

In the above embodiment, the oxygen lance and the coal lance are located above the molten pool, and the O₂ and the coal particles are blown into the furnace chamber 1 from top to bottom, the injecting velocity of the O₂ is supersonic to penetrate through the foam slag, the coal can also be injected into the molten pool, the plurality of oxygen lances are uniformly distributed on the side wall of the furnace chamber to balance the mechanical stirring caused by each lance. In such a way, the chemical energy released by the oxidation of the reduced state substance in the slag is uniformly distributed, and thus the uniformity of the feed distribution in the furnace chamber can be improved; and the plurality of coal lances are uniformly distributed on the side wall of the furnace chamber, so that the conversion rate of reducing the high-valent oxidation state substance into the low-valent reduced state substance is improved.

Preferably, the oxygen lance and the coal lance are installed on the side wall of the furnace chamber, penetrate through a refractory material and enter the furnace chamber.

In the above technical solution, preferably, the metallurgical electric furnace further includes a spray tube, the spray tube is located on the side wall of the furnace chamber above the oxygen lances and used for spraying a hydrocarbon into a furnace freeboard, and the outlet of the spray tube is higher than the slag.

In the above embodiment, a part of the electrical energy and the chemical energy is applied to the reaction (2), the CO produced by the reaction (2) enters the furnace freeboard, and the CO carries a large amount of energy, a part of the heat of combustion released by the reactions (3) and (4) is used for smelting the feed and the reaction (2), a part of the heat of combustion heats up gases (CO,CO₂,O₂) and enters the furnace freeboard to serve as a heat source for the pyrolysis gasification of the hydrocarbon to generate coal gas, therefore the present disclosure generates the coal gas while improving the total power of the smelting, and avoids the waste of energy contained in the flue gas.

The furnace freeboard is also known as a freeboard, which refers to a space above the molten pool and below a furnace roof.

Specifically, the hydrocarbon causes the following reactions in the furnace freeboard:

CₙHₘ = nC + m/2 H₂ (5)

2 CₙHₘ + CO₂ = 2(n+1) CO + m H₂ (6)

CₙHₘ + n H₂O = n CO + (n+m/2) H₂ (7)

C + CO₂ = 2 CO (8)

C + H₂O = H₂ + CO (9)

As the space of the furnace freeboard is limited, the reactions (5), (6), (7), (8), (9) may not reach chemical equilibrium, and the final temperature and gas composition depend on the dynamic balance of the system.

Preferably, a plurality of uniformly distributed spray tubes is arranged on the side wall of the furnace chamber.

In the above technical solution, preferably, the spraying direction of the hydrocarbon into the furnace freeboard is tangential to the side wall of the furnace chamber. Preferably, the hydrocarbon is sprayed horizontally into the freeboard.

The embodiment of the second aspect of the present disclosure provides a smelting method for the metallurgical electric furnace according to any one of the above embodiments, wherein the slag includes a reduced state substance capable of being oxidized by O₂, and the smelting method includes: blowing oxygen into the slag via an oxygen lance so as to oxidize the reduced state substance to an oxidization state substance; and spraying coal into the slag through a coal lance so as to reduce the oxidized oxidization state substance.

According to the smelting method provided by the above embodiment of the present disclosure, the O₂ is blown into the slag from top to bottom to oxidize the low-valent reduced state substance in the slag into a high-valent oxidation state substance, a large amount of chemical energy is released in the oxidation process to effectively smelt the slag, meanwhile, the coal particles are also sprayed into the slag from top to bottom to reduce the high-valent oxidation state substance to a low-valent reduced state, CO is released at the same time, the reduction reaction is an endothermic reaction, the energy released by the oxidation of the reduced state substance is also supplied to the reduction reaction; and in the slag, due to the existence of the O₂, the O₂ may cause a combustion reaction with the CO and C, the heat of combustion of the combustion reaction can raise the temperature of the slag so as to provide heat for melting of the feed, and can also provide energy for the reduction reactions, in this way, the chemical energy released in the oxidation reaction and the energy released in the combustion reaction can be used for melting of the feed, in addition to electrical energy in the smelting process, the chemical energy can also provide a large amount of energy for the smelting process, thereby increasing the total available power for smelting, and improving the productivity and efficiency, (it is especially effective for the slag with a high melting point) and the consumption of electric energy is reduced.

In the above technical solution, preferably, the depth of the oxygen blown into the slag does not exceed one-half of the thickness of the slag.

In the above technical solution, preferably, the depth of the oxygen blown into the slag is within the range of one-third of the thickness of the slag to one-half of the thickness of the slag.

In the above embodiment, for different slag systems, the ratios of the depth of the oxygen blown into the slag to the total thickness of the slag are different, if the slag system needs to be controlled at a very low oxygen potential to reduce the metal oxides to be recovered, the depth of the oxygen blown into the slag is within the range of one-third of the height of the slag bath to two-thirds of the height of the slag bath, and the coal particles can be sprayed deeper, however, not reaching the metal bath underneath the slag, to ensure the low oxygen potential.

In the above technical solution, preferably, the coal is anthracite or bituminous coal.

In the electric arc furnace steelmaking, only the anthracite or coke can be used, and the bituminous coal cannot be used. However, the anthracite or bituminous coal can be used in the present application. Of course, the coke can also be used in the present application.

In the above technical solution, preferably, after injecting the coal particles into the slag through the coal lance, the method further includes: blowing a hydrocarbon into the furnace freeboard through a spray tube.

In the above embodiment, the hydrocarbon is blown into the furnace freeboard horizontally, the energy carried by the CO released by the oxidation reaction, the chemical energy generated by the combustion reaction of CO and O₂, and the chemical energy generated by the combustion reaction of C and O₂ can be used as the heat source for the pyrolysis gasification of the hydrocarbon, so that a coal gas is generated in the furnace freeboard. In the above technical solution, preferably, the hydrocarbon includes natural gas or light oil. Of course, methane gas and solid bituminous coal and the like sprayed into the furnace freeboard can be converted into the coal gas, the temperature of the gases (CO, CO₂, H₂, H₂O) generated in the molten pool is extremely high (the temperature is greater than 1700°C), and the gases contain a large amount of heat, which enters the furnace freeboard, the above hydrocarbon is sprayed into the freeboard to cause endothermic chemical reactions with the CO₂ and H₂O so as to be cracked into the coal gas. In such a way the furnace roof can be cooled by these endothermic reactions.

In the above technical solution, preferably, while spraying the hydrocarbon into the furnace freeboard through the spray tube, the method further includes: spraying liquid water and/or gaseous water into the furnace freeboard through the spray tube.

In the above embodiment, in order to increase the content of hydrogen in the coal gas, a small amount of water may be sprayed while spraying the hydrocarbon. Of course, an additional spray tube can also be arranged on the side wall of the furnace chamber for spraying the water.

Additional aspects and advantages of the present disclosure will become apparent in the following description or are understood via the practice of the present disclosure.

### BRIEF DESCRIPTION OF THE DRAWINGS

The above and/or additional aspects and advantages of the present disclosure will become apparent and readily understood from the following description of embodiments in combination with drawings, wherein:
Fig. 1 is a structural schematic diagram of a metallurgical electric furnace in an embodiment of the present disclosure, wherein an arrow at a site A represents the blowing direction of oxygen into slag, and the arrow at a site B represents the spraying direction of coal particles into the slag;
Fig. 2 is a schematic diagram of an overlooking structure of the metallurgical electric furnace as shown in Fig.1, wherein the arrow at a site C represents the spraying direction of oxygen and coal particles into the slag;
Fig. 3 is a schematic diagram of an overlooking structure of a metallurgical electric furnace in an embodiment of the present disclosure, wherein the arrow at a site D represents the blowing direction of a hydrocarbon into a furnace freeboard.

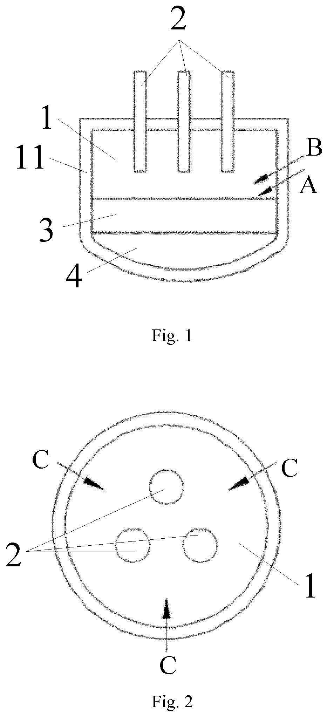

The corresponding relationship between reference signs and component names in Figs. 1 to 3 is as follows:
1 furnace chamber, 11 side wall, 12 electrode, 13 slag, and 14 molten metal.

### DETAILED DESCRIPTION

In order that the above objectives, features and advantages of the present disclosure can be understood more clearly, the present disclosure will be further described in detail below with reference to the drawings and specific embodiments. It should be noted that the embodiments in the present application and the features in the embodiments may be combined with each other without conflict.

In the following description, numerous specific details are set forth in order to provide a thorough understanding of the present disclosure, but the present disclosure may be practiced otherwise than as described herein, therefore the protection scope of the present disclosure is not limited by the specific embodiments disclosed below.

A metallurgical electric furnace and a smelting method for the metallurgical electric furnace according to some embodiments of the present disclosure are described below with reference to the drawings.

As shown in Figs. 1 and 2, a metallurgical electric furnace provided according to some embodiments of the present disclosure includes a furnace body, an oxygen lance and a coal lance. The furnace body is provided with a furnace chamber 1; the oxygen lance located on a side wall 11 of the furnace chamber 1 and used for blowing oxygen into slag 3 promoting the smelting process, wherein the outlet of the oxygen lance is higher than the slag 3; and the coal lance is located on the side wall 11 of the furnace chamber 1 beside the oxygen lance and used for injecting coal particles into the slag 3, wherein the outlet of the coal lance is higher than the slag 3.

In the metallurgical electric furnace provided by the above embodiment of the present disclosure, especially in a continuously operated metallurgical electric furnace, and particularly a metallurgical electric furnace operated by an open arc, the outlet of the oxygen lance and the outlet of the coal lance are higher than the upper surface of the slag 3, the O₂ is blown into the slag 3 from top to bottom (along the direction of an arrow A in Fig. 1 and the direction of an arrow C in Fig. 2) by the oxygen lance, the low-valent reduced state substance in the slag 3 is oxidized to a high-valent oxidation state substance, a large amount of chemical energy is released in the oxidation process, the temperature of the slag 3 is increased, the released chemical energy can effectively smelt the feed, the coal particles is also sprayed into the slag 3 from top to bottom (along the direction of an arrow B in Fig.1 and the direction of an arrow C in Fig.2) through the coal lance, the carbon in the coal particles reduces the high-valent oxidation state substance to a low-valent reduced state, when the high-valent oxidation state substance is reduced by the carbon, CO is released, meanwhile, the reduction reaction needs to absorb the heat, and then the energy released by the oxidation of the reduced state substance is also supplied to the reduction reaction; in the slag 3, due to the existence of the O₂, the O₂ may also cause a combustion reaction with the CO and C, the heat of combustion of the combustion reaction can raise the temperature of the slag 3 so as to provide heat for the smelting of the feed, and can also provide energy for the reduction reaction, in this way, the chemical energy released in the oxidation reaction and the energy released in the combustion reaction can be used for the smelting of the feed, so that in addition to electrical energy in the smelting process, the chemical energy can also provide a large amount of energy for the smelting process, thereby improving the total power of smelting, and improving the productivity and efficiency, and it is especially effective for the slag 3 with a high melting point, so that the consumption of electric energy is reduced.

In the present solution, the oxygen lance and the coal lance are both arranged above the slag 3, the O₂ and the coal particles are blown into the slag 3 from top to bottom, which are away from the furnace lining, so that the damage to the furnace lining is reduced, and the service life of the furnace lining is prevented from being shortened. As shown by the arrow A in Fig.1, as the O₂ is from top to bottom and inclines toward a direction away from the installation position of the oxygen lance on the side wall 11 of the furnace chamber 1, that is, the spraying direction of the O₂ faces to the opposite side of the installation position of the oxygen lance on the side wall 11 of the furnace chamber 1, as shown by the arrow B in Fig.1, the coal particles is also from top to bottom and inclines toward the direction away from the installation position of the coal lance on the side wall 11 of the furnace chamber 1, that is, the spraying direction of the coal particles faces to the opposite side of the installation position of the coal lance on the side wall 11 of the furnace chamber 1, so that the slag flows toward the opposite side of the installation positions of the oxygen lance and the coal lance on the side wall 11 of the furnace chamber 1, but is very far away from the furnace lining, in this way, the generated turbulence is low or somewhat cancelled by one another, and the integrity of the furnace lining can be protected.

Specifically, using an example that the reduced state substance in the slag 3 is Me₂O₃, the chemical reactions occurring in the slag 3 in the oxygen blowing and coal spraying including:

Me₂O₃ + 0.5O₂ = 2MeO₂ (1)

2MeO₂ + C = Me₂O₃ + CO (2)

CO + 0.5O₂ = CO₂ (3)

O₂ + C = CO₂ (4)

After the O₂ is blown, the reaction (1) occurs, the O₂ oxidizes the Me₂O₃ into MeO₂, the oxidation reaction is an exothermic reaction, and a large amount of chemical energy is released in the reaction for smelting of the feed; after the coal particles is injected, the reaction (2) occurs, the carbon reduces the MeO₂ into Me₂O₃, meanwhile, releases CO, the reaction (2) is an endothermic reaction, and the chemical energy released in the reaction (1) is further used for providing energy for the reaction (2) in addition to smelting the feed; and the O₂ in the slag 3 can also cause the combustion reactions (3) and (4) with the CO and C, a part of the heat of combustion is released into the slag 3 for smelting the feed and being supplied to the reaction (2), as the reaction (1), the reaction (3) and the reaction (4) are all exothermic reactions, the chemical energy released in the reactions improves the total smelting power and reduces the consumption of electric energy. At the same time, a large amount of CO is released in the reaction (2) to form bubbles, which swells the slag 3 into foam slag, and the formation of the foam slag 3 is favorable for the blowing of the O₂.

The distribution of electrodes 2 in the furnace chamber is as shown in Figs. 1 and 2, and preferably, three electrodes are arranged in a triangle.

The electric furnace of the present disclosure is fixed, the feed is supplied unceasingly, when the molten iron reaches a certain liquid level, a molten metal outlet is opened to release the molten metal 4, the feed is supplied as usual, and the oxygen and coal are blown and sprayed as usual. After a certain amount of the molten metal 4 flows out, the molten metal outlet is blocked by a blocking machine, after a period of time, when the slag level is too high, a slag opening is opened to discharge the slag, the feed is supplied as usual, and the oxygen and coal are blown and sprayed as usual.

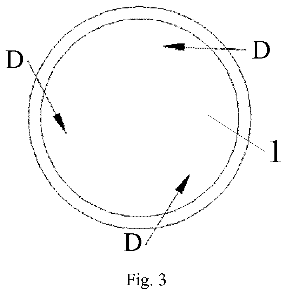

Preferably, as shown in Figs.1 and 3, the continuously operated metallurgical electric furnace includes a plurality of oxygen lances and plurality of coal lances, the plurality of oxygen lances are uniformly distributed along the side wall 11 of the furnace chamber 1; and the plurality of coal lances are uniformly distributed along the side wall 11 of the furnace chamber 1.

In a specific embodiment of the present disclosure, the oxygen lances are located below the coal lances. Preferably, the number of the oxygen lances is equal to the number of the coal lances, the coal lances are located right above the oxygen lances, and the two lances are arranged up and down.

In another specific embodiment of the present disclosure, the oxygen lance and the coal lance are located at the same height on the side wall 11 of the furnace chamber 1 and are arranged on the left and right sides.

Preferably, as shown in Fig.2, the plurality of oxygen lances are uniformly distributed at the same height on the side wall 11 of the furnace chamber 1 along the circumferential direction, and the plurality of coal lances are uniformly distributed at the same height on the side wall 11 of the furnace chamber 1 along the circumferential direction.

Preferably, a coal lance and an oxygen lance can be placed in the same cooling jacket, and the distance between the injection points of the coal lance and the oxygen lance in a molten pool is not less than 300mm.

In the above embodiment, the oxygen lance and the coal lance are located above the molten pool, and the O₂ and the coal particles are blown into the furnace chamber 1 from top to bottom, the flow rate of the O₂ is a supersonic speed to penetrate through the foam slag, and the coal can also be injected into the molten pool. The plurality of oxygen lances are uniformly distributed on the side wall 11 of the furnace chamber 1, so that the uniformity of blowing the O₂ into the slag 3 can be improved, in this way, the distribution uniformity of the chemical energy released by the reduced state substance in the oxidation process in the slag 3 is improved, and the smelting uniformity of the feed in the furnace chamber 1 is improved; and the plurality of coal lances are uniformly distributed on the side wall 11 of the furnace chamber 1, so that the uniformity of spraying the coal particles into the slag 3 is improved, and the conversion rate of reducing the high-valent oxidation state substance into the low-valent reduced state substance is improved.

Preferably, the oxygen lance and the coal lance are installed on the side wall 11 of the furnace chamber 1 and penetrate through a refractory material to enter the furnace chamber 1.

Preferably, as shown in Fig.3, the continuously operated metallurgical electric furnace further includes a spray tube, the spray tube is located on the side wall 11 of the furnace chamber 1 and used for spraying a hydrocarbon into a furnace freeboard, wherein the outlet of the spray tube is higher than the slag 3.

In the above embodiment, a part of the electrical energy and the chemical energy is applied to the reaction (2), the CO produced by the reaction (2) enters the furnace freeboard, and the CO carries a large amount of energy, a part of the heat of combustion released by the reactions (3) and (4) is used for smelting the feed and the reaction (2), a part of the heat of combustion heats up gases (CO, CO₂, O₂) and enters the furnace freeboard to serve as a heat source for the pyrolysis gasification of the hydrocarbon to generate coal gas, therefore the present disclosure improves the total power of the smelting, and meanwhile, generates the coal gas, and avoids the waste of energy contained in the flue gas.

The furnace freeboard is also known as a freeboard, which refers to a space above the molten pool and below a furnace roof

Specifically, the hydrocarbon causes the following reactions in the furnace freeboard:

CₙHₘ = nC + m/2 H₂ (5)

2 CₙHₘ + CO₂ = 2(n+1) CO + m H₂ (6)

CₙHₘ + n H₂O = n CO + (n+m/2) H₂ (7)

C + CO₂ = 2 CO (8)

C + H₂O = H₂ + CO (9)

As the space of the furnace freeboard is limited, the reactions (5), (6), (7), (8), (9) may not reach chemical equilibrium, and the final temperature and gas composition depend on the dynamic balance of the system.

Preferably, as shown in Fig.3, the spraying direction of the hydrocarbon into the furnace freeboard can be (but not limited to) tangential to the side wall 11 of the furnace chamber 1. Preferably, the hydrocarbon is sprayed from top to bottom (along the direction of an arrow D in Fig.3). The spraying direction of the hydrocarbon into the furnace freeboard is tangential to the side wall 11 of the furnace chamber 1, so that the time of the gas to staying in the furnace chamber 1 is prolonged to cause more reactions. But if the location occupied by the spray tube is too large, the design is affected, the spray tube can also be vertical to the side wall 11 of the furnace chamber 1, that is, the spraying direction of the hydrocarbon into the furnace freeboard is vertical to the side wall 11 of the furnace chamber 1.

Preferably, a plurality of uniformly distributed spray tubes is arranged on the side wall 11 of the furnace chamber 1.

The embodiment of the second aspect of the present disclosure provides a smelting method for the metallurgical electric furnace according to any one of the above embodiments, wherein the slag 3 includes a reduced state substance capable of being oxidized by O₂, and the smelting method includes: blowing oxygen into the slag 3 via an oxygen lance so as to oxidize the reduced state substance to an oxidization state substance; and spraying coal into the slag 3 through a coal lance so as to reduce the oxidized oxidization state substance.

According to the smelting method provided by the above embodiment of the present disclosure, the O₂ is blown into the slag 3 from top to bottom (along the direction of the arrow A in Fig.1 and the direction of the arrow C in Fig.2) to oxidize the low-valent reduced state substance in the slag 3 into a high-valent oxidation state substance, a large amount of chemical energy is released in the oxidation process to effectively smelt the slag, meanwhile, the coal particles is also sprayed into the slag 3 from top to bottom (along the direction of the arrow B in Fig.1 and the direction of the arrow C in Fig.2) to reduce the high-valent oxidation state substance to a low-valent reduced state, CO is released at the same time, the reduction reaction is an endothermic reaction, the energy released by the oxidation of the reduced state substance is also supplied to the reduction reaction; and in the slag 3, the O₂ has a combustion reaction with the CO and C, the heat of combustion of the combustion reaction can raise the temperature of the slag 3 so as to provide heat for the smelting of the feed, and can also provide energy for the reduction reaction, in this way, the chemical energy released in the oxidation reaction and the energy released in the combustion reaction can be used for the smelting of the feed, in addition to electrical energy in the smelting process, the chemical energy can also provide a large amount of energy for the smelting process, thereby improving the total power of smelting, and improving the productivity and efficiency, it is especially effective for the slag 3 with a high melting point, and the consumption of electric energy is reduced.

Preferably, the depth of the oxygen blown into the slag 3 does not exceed one-half of the thickness of the slag 3. Thus, a high oxidation area, namely, a high reaction area, is located at the upper part of the slag 3, the lower part is not affected by the blowing and spraying and is still a high reduction area, so that the recovery of the metal is not affected.

Of course, the oxygen can be firstly blown and then the coal is sprayed, and the oxygen blowing and coal spraying can be performed at the same time.

In the above technical solution, preferably, the depth of the oxygen blown into the slag 3 is within the range of one-third of the thickness of the slag 3 to one-half of the thickness of the slag 3.

In the above embodiment, for different slag 3 systems, the ratios of the depth of O₂ blown into the slag 3 to the total thickness of the slag 3 are different, if the slag 3 system needs to be controlled at a very low oxygen potential to reduce the metal oxides to be recycled, the depth of the oxygen blown into the slag 3 is within the range of one-third of the longitudinal thickness of the slag 3 to two-thirds of the longitudinal thickness of the slag 3, and the coal particles can be sprayed deeper to ensure the low oxygen potential.

Preferably, the coal is anthracite or bituminous coal.

In the electric arc furnace steelmaking, only the anthracite or coke can be used, and the bituminous coal cannot be used. However, the anthracite or bituminous coal can be used in the present application. Of course, the coke can also be used in the present application. Because in the steelmaking furnace, the purpose is to generate enough gas (CO) to cause foam slag, but to avoid generating too much gas, which leads to the consumption of excessive oxygen, and the excessive gas generated cannot be recycled at the same time, resulting in waste, so the use of bituminous coal in the steelmaking furnace is avoided. However, in the present disclosure, the gas yield is increased and the gas is completely recycled, so bituminous coal is another choice, and accordingly, the production cost can be reduced.

Preferably, after spraying the coal into the slag 3 through the coal lance, the method further includes: blowing a hydrocarbon into the furnace freeboard through a spray tube.

In the above embodiment, the hydrocarbon is blown into the furnace freeboard horizontally into the furnace freeboard (along the direction of the arrow D or straight to the center in Fig.3), the energy carried by the CO released by the oxidation reaction, the chemical energy generated by the combustion reaction of CO and O₂, and the chemical energy generated by the combustion reaction of C and O₂ can be used as the heat source for the pyrolysis gasification of the hydrocarbon, so that a coal gas is generated in the furnace freeboard.

Preferably, the hydrocarbon includes natural gas or light oil. Of course, methane gas and solid bituminous coal and the like sprayed into the furnace freeboard can be converted into the coal gas, the temperature of the gases (CO+CO₂+H₂+H₂O) generated in the molten pool is extremely high (the temperature is greater than 1700°C), and the gases contain a large amount of heat, which enters the furnace freeboard, the above hydrocarbon is sprayed into the furnace freeboard to cause an endothermic chemical reaction with the CO₂ and H₂O so as to cracked into the coal gas.

Of course, the hydrocarbon can also be blown into the furnace freeboard while the coal is sprayed.

Preferably, while spraying the hydrocarbon into the furnace freeboard through the spray tube, the method further includes: spraying liquid water and/or gaseous water into the furnace freeboard through the spray tube.

In the above embodiment, in order to increase the content of hydrogen in the coal gas, a small amount of water may be sprayed while spraying the hydrocarbon. Of course, an additional spray tube can also be arranged on the side wall of the furnace chamber for spraying the water. With respect to the spraying sequence of the liquid water and/or the gaseous water and the hydrocarbon, the water can be sprayed while blowing the hydrocarbon, or can be sprayed successively. Specifically, the hydrocarbon can be sprayed at first and the water can also be sprayed at first.

Using the smelting of titanium vanadium magnetite as an example, the oxygen blowing and coal spraying is carried out in a pilot electric furnace, and the operating parameters are different according to the conditions of the raw materials. The table below lists some operation parameters of two different smelting manners and the obtained iron output, coal gas output and coal gas components.

| | | | |
|---|---|---|---|
| Embodiment | - | First embodiment | Second embodiment |
| Raw material | - | Direct cold feeding | Prereduction hot feeding |
| Metallization rate | % | 0 | 85 |
| Inlet temperature | °C | 25 | 650 |
| Iron output | tph | 1.2 | 2.9 |
| Slag output | tph | 0.8 | 1.9 |
| Electric power | MW | 2.4 | 1.9 |
| Chemical energy power | MW | 4.1 | 4.6 |
| Total power | MW | 6.5 | 6.5 |
| Oxygen blowing amount | Nm³/h | 1435 | 1607 |
| Natural gas spraying amount | Nm³/h | 323 | 354 |
| Bituminous coal spraying amount | tph | 2.0 | 2.2 |
| Anthracite adding amount | tph | 0.59 | 0.35 |
| Nitrogen consumption | Nm³/h | 198 | 222 |
| Electric furnace flue gas flow | Nm³/h | 6302 | 6394 |
| CO | Vol% | 59 | 57 |
| H₂ | Vol% | 29 | 30 |
| N₂ | Vol% | 7 | 7 |
| CO₂ | Vol% | 3 | 4 |
| H₂O | Vol% | 2 | 2 |

The first embodiment differs from the second embodiment in that, in the first embodiment, the cold material is directly added into the metallurgical electric furnace, and in the second embodiment, the vanadium titano-magnetite is pre-reduced to a high metallization rate, and then the hot material is added into the metallurgical electric furnace.

It can be seen from the parameters of the first embodiment and the second embodiment that after the oxygen blowing and coal spraying technology is adopted in the metallurgical electric furnace, the electric power accounts for 37% of the total power in the first embodiment, and the electric power accounts for 30% of the total power in the second embodiment, therefore, after the oxygen blowing and coal spraying technology is adopted, the consumption of electric energy is reduced in the smelting.

In the first embodiment and the second embodiment, the total power is the same, and the coal gas output and the components generated are also substantially the same, but the iron output produced in the second embodiment is 2.4 times greater than that of the first embodiment. In the first embodiment, the cold material is directly added and is not pre-reduced, so that the equipment is simple, and the investment is small, but the total energy consumption per ton of finished product is large, and the dosage of the anthracite used as a reducing agent is large. In the second embodiment, the pre-reduced hot material requires the investment of pre-reduction equipment, but the cheap bituminous coal can be used as a fuel and the reducing agent to reduce the dosage of the anthracite, and the smelting energy consumption is small. In the actual using process, the choice of direct addition of the cold material or the addition of the pre-reduced hot material can depend on the energy price.

It should be noted that the solution is mainly for the smelting of vanadium, titanium and iron ore. At this time, the oxidation state substance in the reactions (1) and (2) is TiO₂, and the reduced state substance is Ti₂O₃, but it can also be applied to the smelting of FeO/Fe₃O₄ systems with the presence of copper sulfide and nickel sulfide ores.

In summary, the continuously operated metallurgical electric furnace provided by the embodiment of the present disclosure adopts the oxygen blowing and coal spraying technology, the O₂ oxidizes the low-valent reduced state substance in the slag 3 into the high-valent oxidation state substance, the chemical energy released in the oxidation process can effectively smelt the feed, and meanwhile, the coal particles is also sprayed into the slag 3 from top to bottom to reduce the high-valent oxidation state substance into the low-valent reduced state; the O₂ in the slag 3 causes the combustion reaction with the CO and C to further provide heat for the smelting of the feed, so that in addition to the electrical energy in the smelting process, the chemical energy can also provide a large amount of energy for the smelting process, thereby improving the total power of smelting, and improving the productivity and efficiency, it is especially effective for the slag 3 with a high melting point, and the consumption of electric energy is reduced.

In the description of the present disclosure, the term "plurality" means two or more unless specifically stated or defined otherwise; unless otherwise specified or stated, the terms "connection", "fixation" and the like are understood generally, for example, the "connection" may be a fixed connection, a detachable connection, or an integral connection, or an electrical connection; and it may be directly connected or indirectly connected through an intermediate medium. The specific meanings of the above terms in the present disclosure may be understood by those of ordinary in the art according to the specific conditions.

In the description of the present specification, it should be understood that the orientation or positional relationships indicated by the terms "upper", "lower", "front", "rear", "left", "right" and the like are orientation or positional relationships shown in the drawings, are merely for the convenience of describing the present disclosure and simplifying the description, and are not intended to imply that the devices or units referred to have specific orientations, are constructed and operated in specific orientations, and therefore are not to be construed as limiting the present disclosure.

In the description of the present specification, the description of the terms "one embodiment", "some embodiments", "specific embodiments" and the like mean that the specific features, structures, materials or characteristics described in combination with the embodiments or examples are included in at least one embodiment or example of the present disclosure. In the present specification, the schematic expressions of the above terms do not necessarily refer to the same embodiment or example. Furthermore, the particular features, structures, materials or characteristics described may be combined in a suitable manner in any one or more embodiments or examples.

The above descriptions are only preferred embodiments of the present disclosure, and are not intended to limit the present disclosure, and various modifications and changes can be made to the present disclosure for those skilled in the art. Any modifications, equivalent substitutions, improvements and the like made within the spirit and principle of the present disclosure shall fall within the protection scope of the present disclosure.

## Claims

1. A metallurgical electric furnace, comprising:
a furnace body provided with a furnace chamber;
an oxygen lance located on a side wall of the furnace chamber and used for blowing oxygen into slag promoting the smelting process, wherein the outlet of the oxygen lance is higher than the slag; and
a coal lance located on the side wall of the furnace chamber beside the oxygen lance and used for injecting coal particles into the slag, wherein the outlet of the coal lance is higher than the slag.

2. The metallurgical electric furnace according to claim 1, comprising:
a plurality of oxygen lances that are uniformly distributed along the side wall of the furnace chamber; and
an equal number of coal lances that are uniformly distributed along the side wall of the furnace chamber;
wherein the oxygen lances are located below the coal lances, or the oxygen lances and the coal lances are located at the same height on the side wall of the furnace chamber.

3. The metallurgical electric furnace according to claim 1 or 2, further comprising:
a spray tube located on the side wall of the furnace chamber and used for spraying a hydrocarbon into a furnace freeboard, wherein the outlet of the spray tube is higher than the slag.

4. The metallurgical electric furnace according to claim 3, wherein
the spraying direction of the hydrocarbon into the furnace freeboard can be (but not limited to) tangential to the side wall of the furnace chamber.

5. A smelting method for the metallurgical electric furnace according to any one of claims 1-4, wherein the slag comprises a reduced state substance capable of being oxidized by oxygen, and the smelting method comprises:
blowing oxygen into the slag via an oxygen lance so as to oxidize the reduced state substance to an oxidization state substance; and
spraying coal into the slag through a coal lance so as to reduce the oxidized oxidization state substance.

6. The smelting method according to claim 5, wherein
the depth of the oxygen blown into the slag does not exceed one-half of the thickness of the slag.

7. The smelting method according to claim 6, wherein
the depth of the oxygen blown into the slag is within the range of one-third of the thickness of the slag to one-half of the thickness of the slag.

8. The smelting method according to claim 5, wherein
the coal is anthracite or bituminous coal.

9. The smelting method according to any one of claims 5-8, wherein after spraying the coal into the slag through the coal lance, the method further comprises:
blowing a hydrocarbon into the furnace freeboard through a spray tube.

10. The smelting method according to claim 9, wherein
the hydrocarbon comprises natural gas or light oil.

11. The smelting method according to claim 9, wherein while spraying the hydrocarbon into the furnace freeboard through the spray tube, the method further comprises:
spraying liquid water and/or gaseous water into the furnace freeboard through the spray tube.
